# EUROPÄISCHE PATENTANMELDUNG

(11) **EP 2 154 009 A1**
(43) Veröffentlichungstag der Anmeldung: **17.02.2010**
(21) Anmeldenummer: 08450120.4
(22) Anmeldetag: 07.08.2008
(51) Int. Cl.: B60C 27/10

(54) **Spannschloss**

(71) Anmelder: Pewag Schneeketten GMBH & Co KG, 8020 Graz (AT)
(72) Erfinder: Pengg, Ägyd, 9020 Klagenfurt (AT)
(74) Vertreter: Patentanwaltskanzlei Matschnig & Forsthuber OG

(57) **Zusammenfassung**

Ein Spannschloss (6, 6', 6", 6"') für ein auf ein Rad (3) eines Fahrzeuges montierbare Gleitschutzkette (1) mit einem Gehäuse (7, 7', 7", 7"') und einem durch eine Gehäuseöffnung in das Gehäuse (7) hineinziehbaren Spannstrang (8), wobei der Spannstrang (8) innerhalb des Gehäuses (7, 7', 7", 7"') an eine in Aufwickelrichtung vorgespannte, um ihre Achse (a) drehbar gelagerte Wickelrolle (9) angeschlossen ist, wobei an der Wickelrolle (9) ein Klinkenkrad (11,11",11"') mit zumindest einer ihm zugeordneten Sperrklinke (12,12',12",12"') vorgesehen ist und der Spannstrang (8) durch Eingreifen der Sperrklinke (12,12', 12", 12"') in das Klinkenrad (11,11",11"') entgegen seiner Spannrichtung blockierbar ist, wobei die Sperrklinke (12,12',12",12"') aus einer bei Stillstand des Rades (3) vorliegenden Ruhestellung, in welcher sie nicht in Eingriff mit dem Klinkenrad (11, 11", 11"') steht und der Spannstrang (8) nicht blockiert ist, unter Einwirkung der Fliehkraft bei Rotation des Rades (8) zumindest abschnittsweise nach außen bewegt wird und diese Bewegung ein Eingreifen der Sperrklinke (12,12', 12", 12"') in das Klinkenrad (11, 11", 11"') bewirkt.

## Beschreibung

Die Erfindung betrifft eine Spannvorrichtung für eine auf ein Rad eines Fahrzeuges montierbare Gleitschutzkette mit einem Gehäuse und einem durch eine Gehäuseöffnung in das Gehäuse hineinziehbaren Spannstrang, wobei der Spannstrang innerhalb des Gehäuses an eine in Aufwickelrichtung vorgespannte, um ihre Achse drehbar gelagerte Wickelrolle angeschlossen ist, wobei an der Wickelrolle ein Klinkenkrad mit zumindest einer ihm zugeordneten Sperrklinke vorgesehen ist und der Spannstrang durch Eingreifen der Sperrklinke in das Klinkenrad entgegen seiner Spannrichtung blockierbar ist.

Spannvorrichtungen werden bei Gleitschutzketten verwendet, um nach der Montage einen unerwünschten Rücklauf des Spannstranges entgegen der Spannrichtung zu vermeiden. Eine mögliche Anordnung des Spannschlosses an der Gleitschutzkette bzw. des Spannstranges ist beispielsweise aus der AT 412 202B bekannt geworden.

Eine Spannvorrichtung der eingangs genannten Art wird beispielsweise in der DE 297 03 911 U1 vorgestellt. Bei dieser Spannvorrichtung ist ein Gehäuse vorgesehen, in welchem der Spannstrang auf eine Wickeltrommel aufgewickelt werden kann, die mit einem Klinkenrad drehfest verbunden ist. Die Wickeltrommel ist zum Aufwickeln des Spannstranges in der Aufwickelrichtung durch eine Feder vorgespannt. Das Aufwickeln des Spannstranges kann über einen außen am Gehäuse angebrachten Betätigungshebel ausgelöst werden. Nachteilig an dieser Vorrichtung ist die relativ unpraktische Handhabung des Betätigungshebels, der im Falle von Verschmutzung bzw. Vereisung auch leicht verklemmen kann.

Aus der AT 504476 und der AT504599 sind Spannschlösser bekannt geworden, bei welchen ein Massestück vorgesehen ist, welches in einem montierten Zustand bei Rotation eines Rades durch die auftretende Fliehkraft in dem Spannschloss radial nach außen bewegt wird. Durch die Bewegung des Massestückes wir ein drahtförmiger, freier Endabschnitt eines Spannstranges eingeklemmt. Bei dem der vorliegenden Erfindung zugrunde liegenden Spannschloss ist jedoch kein freies Ende des Spannstranges vorgesehen, auf welches ein Klemmelement wirken könnte. Vielmehr ist der Spannstrang und folglich dessen Endbereich auf eine Wickelrolle des Spannschlosses aufgerollt. Die bekannten Ausführungsformen sind zur vorübergehenden Fixierung eines Spannstranges eines Spannschlosses der eingangs genannten Art bauartbedingt nicht gut geeignet, da bei einem gattungsgemäßen Spannschloss eine direkte Klemmung des Spannstranges durch ein bewegliches Massestück zu einem komplizierten Aufbau des Spannsschlosses führen würde.

Eine Aufgabe der Erfindung liegt daher darin, ein Spannschlosses der eingangs genannten Art zu schaffen, welches zum Lösen nicht manuell betätigt werden muss, und das einen dem rauen Betrieb entsprechenden robusten und einfachen Aufbau besitzt.

Diese Aufgabe wird mit einem Spannschloss der eingangs genannten Art erfindungsgemäß dadurch gelöst, dass die Sperrklinke aus einer bei Stillstand des Rades vorliegenden Ruhestellung, in welcher sie nicht in Eingriff mit dem Klinkenrad steht und der Spannstrang nicht blockiert ist, unter Einwirkung der Fliehkraft bei Rotation des Rades zumindest abschnittsweise nach außen bewegt wird und diese Bewegung ein Eingreifen der Sperrklinke in das Klinkenrad bewirkt.

Gemäß der erfindungsgemäßen Lösung stellt die Sperrklinke ein Fliehkraftpendel dar, welches unter Einfluss der Fliehkraft ab einer gewissen Umdrehungszahl des Fahrzeugrades mit dem Klinkenrad in Eingriff gebracht wird und bei Stillstand des Rades bzw. bei einer Verringerung der Umdrehungszahl des Rades in seine ursprüngliche Position zurückkehrt. Somit erfolgt ab einer gewissen Drehzahl des Rades bzw. Geschwindigkeit des Fahrzeuges ein Eingreifen der Sperrklinke in das Klinkenrad und dadurch eine Fixierung des Spannstranges entgegen seiner Aufwickelrichtung, wodurch ein ungewolltes Abwickeln des Spannstranges von der Wickelrolle verhindert werden kann und ein sicherer Halt der Gleitschutzkette an dem Reifen gewährleistet wird, ohne dass es hierdurch zu einer Beeinträchtigung bei der Montage der Kette kommt.

Eine Variante der Erfindung, die sich durch einen einfachen und somit kostengünstig herzustellenden Aufbau auszeichnet, sieht vor, dass die Sperrklinke exzentrisch um eine Achse drehbar gelagert ist, wobei ein nicht mit dem Klinkenrad zusammenwirkender freier Endabschnitt länger und massereicher als ein zweiter mit dem Klinkenrad zusammenwirkender Endabschnitt der Sperrklinke ausgebildet ist. Bei dieser Variante der Erfindung weist das Klinkenrad günstiger Weise an einer äußeren Umfangsfläche eine Verzahnung auf, wodurch sich eine weitere Vereinfachung des Aufbaus erzielen lässt.

Eine sehr kompakte Bauweise lässt sich dadurch erzielen, dass das Klinkenrad an einer inneren Umfangsfläche eine Verzahnung aufweist, mit welcher die Sperrklinke durch eine von der Fliehkraft bewirkte Verschiebung und/oder Verdrehung in Eingriff bringbar ist, wobei die Sperrklinke von dem Klinkenrad umgeben ist.

Ein flacher Aufbau des Spannschlosses wird dadurch erreicht, dass die Sperrklinke plattenförmig ausgebildet ist und zumindest einen mit dem Klinkenrad in Eingriff bringbaren Fortsatz aufweist.

Gemäß einer vorteilhaften Variante der Erfindung ist die Sperrklinke mit zumindest einer der Fliehkraft entgegen wirkenden Feder belastet. Durch Einstellung der Federkraft lassen sich ein definiertes Eingreifen der Sperrklinke sowie ein gesichertes Zurückführen der Sperrklinke in die Ausgangsposition gewährleisten. Durch das Zurückführen in die Ausgangsposition durch die Federkraft wird sichergestellt, dass es zu keinem ungewollten Blockieren des Spannstranges bei der Montage bzw. Demontage der Gleitschutzkette kommt.

Eine andere Variante der Erfindung zur Erzielung einer einfachen und kompakten Ausführungsform sieht vor, dass die Sperrklinke in radialer Richtung verschiebbar an einem Führungszapfen des Gehäuses gelagert ist, wobei die Sperrklinke eine Aufnahme für den Führungszapfen aufweist, wobei der an die Aufnahme anschließende, den mit dem Klinkenrad in Eingriff bringbaren Fortsatz aufweisende Endbereich der Sperrklinke den größten Teil der Masse der Sperrklinke aufweist.

Eine Ausführungsform, welche durch einen einfachen Aufbau und eine einfache Montierbarkeit der Feder auszeichnet sieht vor, dass eine Schraubenfeder vorgesehen ist, die zwischen dem Führungszapfen und einem den mit dem Klinkenrad in Eingriff bringbaren Fortsatz aufweisenden Endbereich gegenüberliegenden Endbereich der Ausnehmung angeordnet ist.

Um eine sehr gute Führung und Definition des Bewegungsablaufes der Sperrklinke und dadurch eine sehr gute Funktionalität zu gewährleisten, kann die Sperrklinke im Bereich ihres mit dem Klinkenrad zusammenwirkenden Endbereiches um eine Achse drehbar gelagert sein. Die Sperrklinke kann hierbei eine Ausnehmung zur Aufnahme des oben erwähnten Führungszapfens des Gehäuses aufweisen. Ein an die Ausnehmung anschließender, freier dem mit dem Klinkenrad zusammenwirkenden Endbereiches gegenüberliegender Endabschnitt der Sperrklinke kann hierbei den größten Teil der Masse der Sperrklinke aufweisen.

Ein vereinfachter Zusammenbau und eine kompakte Bauweise des Spannschlosses lassen sich dadurch erzielen dass die Wickelrolle und das Klinkenrad einstückig miteinander ausgebildet sind.

Die Erfindung samt weiteren Vorteilen wird im Folgenden anhand einiger nicht einschränkender Ausführungsbeispiele näher erläutert, welche in den Zeichnungen dargestellt sind, in diesen zeigen schematisch:
Fig. 1 eine Gleitschutzkette mit einem Spannschloss für deren einen Seitenstrang, montiert auf einem Fahrzeugreifen, in Seitenansicht;
Fig. 2 eine erste Version eines erfindungsgemäßen Spannschlosses mit einem abgenommenen Gehäusedeckel, wobei sich die Sperrklinke in einer Blockierungsposition befindet;
Fig. 2a das Spannschloss aus Fig. 1, wobei sich die Sperrklinke in einer Freigabeposition befindet;
Fig. 3 eine zweite Variante eines erfindungsgemäßen Spannschlosses mit abgenommenem Gehäusedeckel, wobei sich die Sperrklinke in einer Blockierungsposition befindet;
Fig. 4 eine dritte Variante eines erfindungsgemäßen Spannschlosses mit abgenommenem Gehäusedeckel, wobei sich die Sperrklinke in einer Freigabeposition befindet;
Fig. 5 eine Explosionsdarstellung einer vierten Variante eines erfindungsgemäßen Spannschlosses;
Fig. 5a eine Draufsicht auf das Spannschloss aus Fig. 5 mit einem abgenommenen ersten Gehäusedeckel und
Fig. 5b eine perspektivische Draufsicht auf das Spannschloss aus Fig. 5 mit einem abgenommenen zweiten Gehäusedeckel.

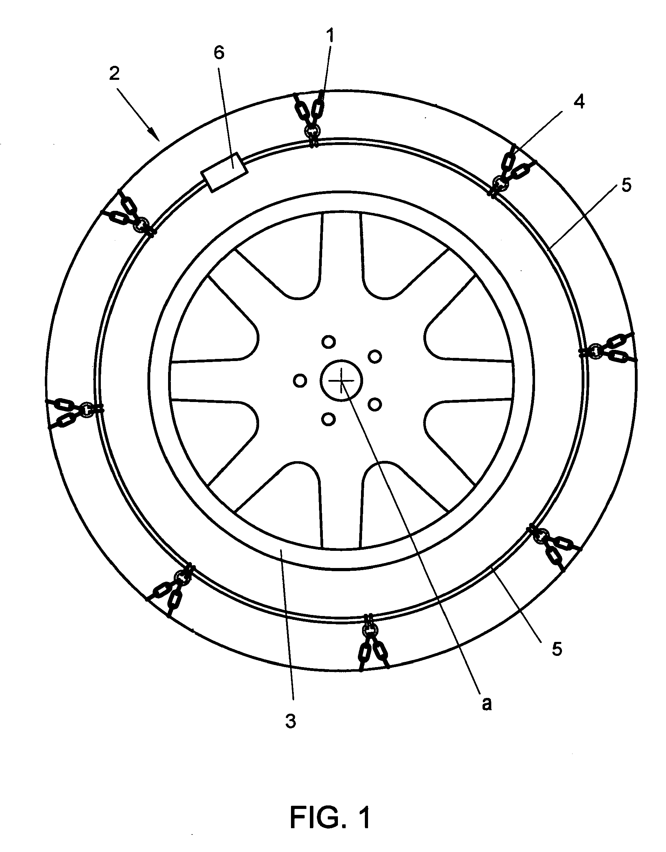

Nunmehr auf Fig. 1 Bezug nehmend erkennt man eine Gleitschutzkette 1, die auf einen Reifen 2 eines Fahrzeugrades 3 mit der Radachse a aufgezogen ist. Das Kettennetz 4 der Gleitschutzkette 1 ist an der Innen- und der Außenseite des Reifens bzw. Rades in bekannter Weise durch Seitenstränge 5 zusammen gehalten bzw. gespannt. Hier sei angemerkt, dass die Seitenstränge 5 an der Innenseite des Reifens elastisch ausgebildet sein und durch ein Spannschloss 6 nach der Erfindung zusammengehalten werden können, wobei an der Außenseite eine andere Konstruktion verwendet werden kann. Andererseits kann die gesamte Spanneinrichtung einschließlich des Spannschlosses 6 innen und außen auch gleich ausgebildet sein. Jedenfalls ist die Erfindung in ihrer Anwendung nicht auf eine der beiden Reifenseiten beschränkt.

Der Seitenstrang 5 kann eine Zugfeder - beispielsweise eine Spiralfeder - aufweisen. Im Inneren der Spiralfeder kann ein, im Folgenden mit dem Bezugszeichen 8 bezeichneter Spannstrang verlaufen. Die Zugspannung der Zugfeder, die den Mantel darstellt, ist so groß, dass die Gleitschutzkette 1, beispielsweise eine Schneekette, nach dem Anlegen der Kette gespannt ist.

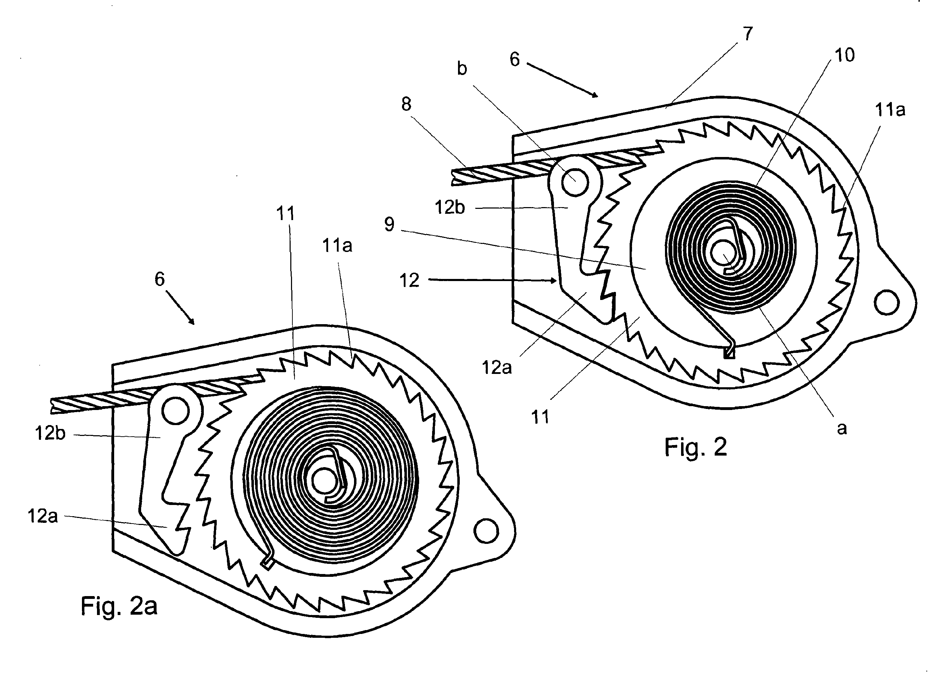

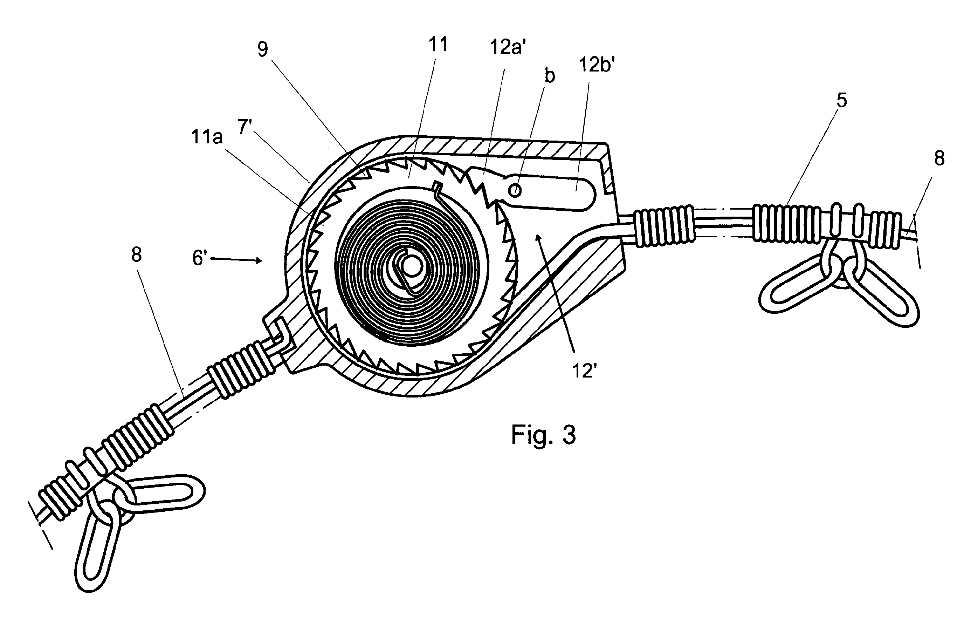

Gemäß Fig. 2 weist das erfindungsgemäße Spannschloss 6 ein Gehäuse 7 auf. Der Spannstrang 8 kann durch eine Gehäuseöffnung in das Gehäuse 7 hinein bzw. aus dem Gehäuse 7 heraus gezogen werden. Innerhalb des Gehäuses 7 ist der Spannstrang 8 an eine in Aufwickelrichtung vorgespannte, um ihre Achse a drehbar gelagerte Wickelrolle 9 angeschlossen, auf welche der Spannstrang 8 aufgewickelt werden kann. Die Wickelrolle 9 kann beispielsweise mit einer Spiralfeder 10 in Aufwickelrichtung vorgespannt sein, deren Enden an der Wickelrolle 9 und dem Gehäuse 7 des Spannschlosses 6 fixiert sind. Das andere Ende des Spannstranges 8 kann, wie aus Fig. 3 ersichtlich, außen an dem Gehäuse 7 des Spannschlosses 6 befestigt sein.

An der Wickelrolle 9 ist ein Klinkenkrad 11 mit zumindest einer ihm zugeordneten Sperrklinke 12 vorgesehen. Durch Eingreifen der Sperrklinke 12 in das Klinkenrad 11 ist der Spannstrang 8 entgegen seiner Spannrichtung blockierbar. Für alle gezeigten Ausführungsformen der Erfindung gilt, dass die Sperrklinke und die Verzahnung des Klinkenrades kongruent zueinander ausgebildet sein können. Günstiger Weise können die Wickelrolle 9 und das Klinkenrad 11 bei allen Varianten der Erfindung einstückig miteinander ausgebildet sein.

Das Klinkenrad kann gemäß den in den Fig. 2, 2a und 3 dargestellten Ausführungsformen an einer äußeren Umfangsfläche eine Verzahnung 11a aufweisen.

Fig. 2a zeigt die Sperrklinke 12 bei Stillstand des Rades 3. Hierbei befindet sich die Sperrklinke 12 in einer Ruhestellung, in welcher sie nicht in Eingriff mit dem Klinkenrad 11 steht, der Spannstrang 8 nicht blockiert ist und unter Einwirkung einer Kraft entgegen seiner Aufwickelrichtung aus dem Gehäuse gezogen und die Gleitschutzkette 1 auf den Reifen 2 montiert bzw. demontiert werden kann. Das Spannschloss 6 dient dazu, den Spannstrang 8 auch beim Einwirken erheblicher Kräfte im Betrieb zu Fixieren und somit einen guten Halt der Gleitschutzkette 1 zu gewährleisten.

Für alle dargestellten Ausführungsformen der Erfindung gilt, dass unter Einwirkung der durch eine Rotation des Rades 3 hervorgerufenen Fliehkraft die Sperrklinke 12 aus einer bei Stillstand des Rades 3 vorliegenden Ruhestellung, in welcher sie nicht in Eingriff mit dem Klinkenrad 11 steht und der Spannstrang 8 nicht blockiert ist, zumindest abschnittsweise nach außen bewegt wird. Durch diese von der Fliehkraft hervorgerufene Bewegung wird ein Eingreifen der Sperrklinke 12 in das Klinkenrad 11 bewirkt.

Wie aus den Darstellungen der Fig. 2 und 2a ersichtlich, kann die Sperrklinke 12 exzentrisch um eine Achse b gelagert sein. Gemäß den Fig. 2 und 2a kann die Lagerung der Sperrklinke ihrem dem mit dem Klinkenrad 11 zusammenwirkenden Ende 12a gegenüberliegenden Endbereich 12b erfolgen.

Wie in Fig. 3 dargestellt, kann bei einem erfindungsgemäßen Spannschloss 6' ein nicht mit dem Klinkenrad 11 zusammenwirkender freier Endabschnitt 12b' der Sperrklinke 12' länger und massereicher als ein zweiter mit dem Klinkenrad 11 zusammenwirkender Endabschnitt 12a' der Sperrklinke 12' ausgebildet sein. Durch die Fliehkraft kann der massereichere Teil 12b' nach außen bewegt werden, wodurch es zu einer Drehung der Sperrklinke 12' in dem Gehäuse 7' um die Achse b kommt. Durch diese Drehung wird der Abschnitt 12a' mit der Verzahnung 11a des Klinkenrades 11 in Eingriff gebracht. Bei Verringerung bzw. Wegfall der Fliehkraft sinkt das massereichere Stück in seine Ruhelage zurück, wodurch es zu einem Lösung des Abschnittes 12a' der Sperrklinke 12' und der Verzahnung 11a kommt.

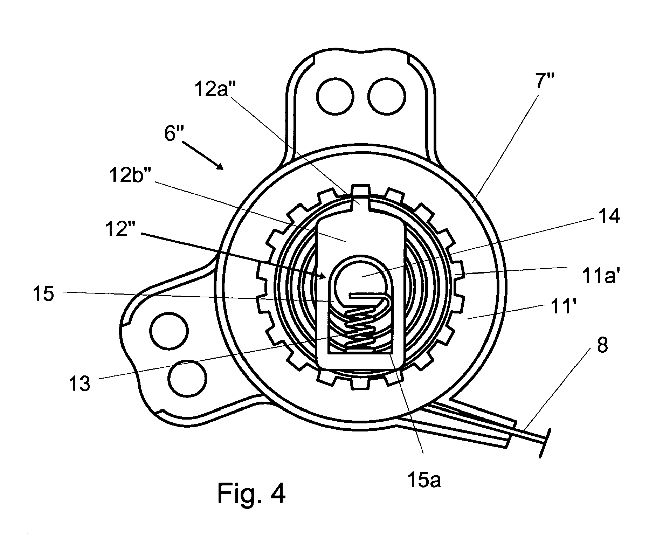

Gemäß der in Fig. 4 gezeigten Variante eines erfindungsgemäßen Spannschlosses 6" kann die Sperrklinke 12" radial verschiebbar in dem Gehäuse 7" gelagert sein. Das Klinkenrad 11' weist hierbei an einer inneren Umfangsfläche eine Verzahnung 11a' auf, mit welcher die Sperrklinke durch eine von der Fliehkraft bewirkte Verschiebung und/ oder Verdrehung der Sperrklinke in Eingriff gebracht werden kann. Das Klinkenrad 11' ist hierbei einstückig mit der Wickelrolle 9 ausgebildet, wobei die Verzahnung an einer kreisrunden Ausnehmung der Wickelrolle 9 angeordnet ist. Anders ausgedrückt, kann eine innere Umfangsfläche des Klinkenrades 11' die Verzahnung 11a' aufweisen, während eine äußere Umfangsfläche zum Aufwickeln des Spannstranges 8 vorgesehen ist.

Die Sperrklinke 12" ist von dem Klinkenrad 11' bzw. der Verzahnung 11a' seitlich umgeben. D.h. das Klinkenrad 11' bzw. die Verzahnung 11a' ist in einer gemeinsamen Schnittebene betrachtet um die Sperrklinke 12" herum angeordnet, sodass bei einer beliebigen Drehung des Klinkenrades 11' die Sperrklinke 12" mit der Verzahnung 11a' in Eingriff gebracht werden kann.

Die dargestellte Sperrklinke 12" ist plattenförmig ausgebildet und weist zumindest einen mit dem Klinkenrad 11' bzw. der Verzahnung 11a' in Eingriff bringbaren Fortsatz 12a" auf. Der Fortsatz 12a" und die Verzahnung 11a' sind kongruent zueinander ausgebildet. In der hier dargestellten Ausführungsform der Erfindung ist der Fortsatz 12a" trapezförmig ausgebildet, wobei die Verzahnung 11a' entsprechende trapezförmige Ausnehmungen aufweist.

Weiters ist die Sperrklinke 12" mit einer der Fliehkraft entgegen wirkenden Feder 13 belastet. Die Sperrklinke 12" ist in radialer Richtung verschiebbar an einem Zapfen 14 des Gehäuses gelagert, wobei die Sperrklinke 12" eine Aufnahme 15 für den Führungszapfen 14 aufweist. Der an die Aufnahme 15 anschließende, den mit dem Klinkenrad 11' in Eingriff bringbaren Fortsatz 12a" aufweisende Endbereich 12b" der Sperrklinke weist den größten Teil der Masse der Sperrklinke 12" auf und wird bei einer Rotation des Rades 3 durch die Fliehkraft in Richtung der Verzahnung 11a' des Klinkenrades 11' bewegt. Zwischen dem Führungszapfen 14 und dem Endbereich 15a der Ausnehmung 15 ist die oben erwähnte Feder 13, welche als Schaubenfeder ausgeführt sein kann, angeordnet.

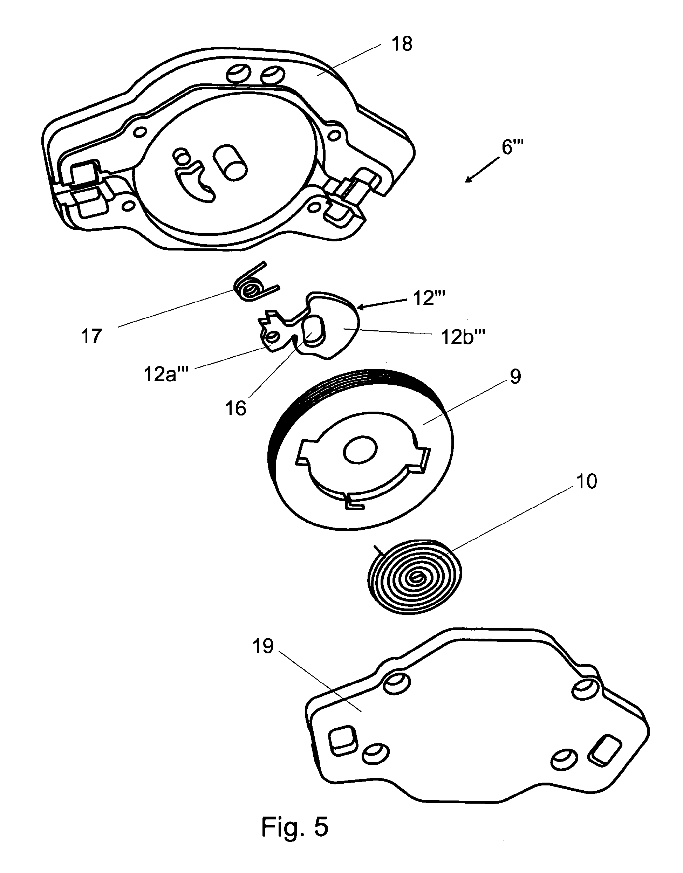

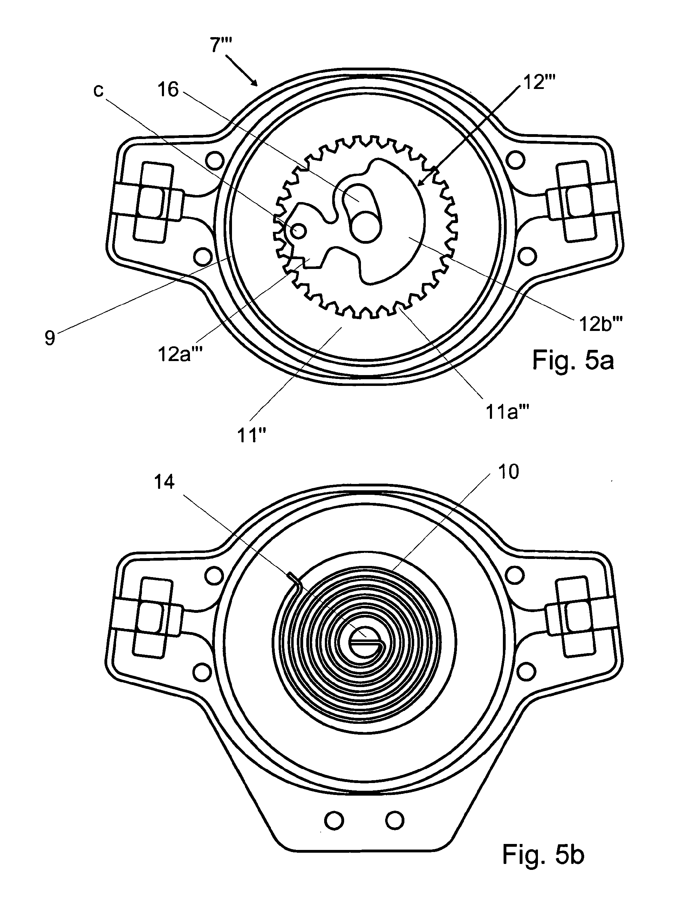

Nunmehr Bezug nehmend auf die in den Figuren 5 - 5b dargestellte Variante der Erfindung kann die plattenförmige Sperrklinke 12"' des Spannschlosses 6"' im Bereich ihres mit dem Klinkenrad 11" zusammenwirkenden Endbereiches 12a"' um eine Achse c drehbar gelagert sein. Das Klinkenrad 11" und die Wickelrolle 9 können bei dieser Variante der Erfindung gleichartig ausgebildet sein, wie die oben beschriebene und in Fig. 4 dargestellte Variante des Klinkenrades 11' bzw. der Wickelrolle 9.

Gemäß der in den Figuren 5 - 5b dargestellten Variante der Erfindung weist die Sperrklinke 12"' eine Ausnehmung 16 zur Aufnahme des Zapfens 14 des Gehäuses 7'" auf. Fig. 5a zeigt hierbei eine Draufsicht auf das Spannschloss 6, bei welchem der in Fig. 5 mit dem Bezugszeichen 18 versehene Gehäusedeckel abgenommen ist, während Fig. 5b eine Draufsicht auf das Spannschloss mit einem in Fig. 5 mit dem Bezugszeichen 19 bezeichneten, abgenommenen Gehäusedeckel zeigt. Der Zapfen 14 kann, wie auch bei allen anderen oben genannten Ausführungsformen einen Schlitz zur Aufnahme eines Endbereichs der Spiralfeder 10 aufweisen und somit als Befestigungselement der Spiralfeder 10 in dem Gehäuse 7 dienen. Die Ausnehmung 16 ist der Drehbewegung der Sperrklinke 12"' um die Achse c angepasst, sodass eine ungehinderte Ausdrehung der Sperrklinke 12"' unter Einfluss der Fliehkraft erfolgen kann. Ein an die Ausnehmung 16 anschließender freier, Endbereich 12b"' bzw. Teil der Sperrklinke 12"' weist die größte der Masse der Sperrklinke 12"' auf. Unter Einfluss der Fliehkraft kann der Teil 12b"' nach außen bewegt werden, wodurch es zu er Verdrehung um die Achse c und zu einem Eingreifen des Fortsatzes 12a"' in die Verzahnung 11a" des Klinkerades kommt. Auch bei dieser Variante der Erfindung ist die Sperrklinke 12"' Federbelastet, wobei hier bevorzugter Weise eine sich an dem Gehäuse der Spannvorrichtung und an der Sperrklinke abstützende bzw. befestigte Feder 17 zum Einsatz kommt.

## Patentansprüche

1. Spannschloss (6, 6', 6", 6"') für eine auf ein Rad (3) eines Fahrzeuges montierbare Gleitschutzkette (1) mit einem Gehäuse (7, 7', 7", 7"') und einem durch eine Gehäuseöffnung in das Gehäuse (7) hineinziehbaren Spannstrang (8), wobei der Spannstrang (8) innerhalb des Gehäuses (7, 7', 7", 7"') an eine in Aufwickelrichtung vorgespannte, um ihre Achse (a) drehbar gelagerte Wickelrolle (9) angeschlossen ist, wobei an der Wickelrolle (9) ein Klinkenkrad (11, 11", 11"') mit zumindest einer ihm zugeordneten Sperrklinke (12,12',12", 12"') vorgesehen ist und der Spannstrang (8) durch Eingreifen der Sperrklinke (12, 12', 12", 12"') in das Klinkenrad (11, 11", 11"') entgegen seiner Spannrichtung blockierbar ist, **dadurch gekennzeichnet, dass** die Sperrklinke (12, 12', 12", 12"') aus einer bei Stillstand des Rades (3) vorliegenden Ruhestellung, in welcher sie nicht in Eingriff mit dem Klinkenrad (11, 11", 11"') steht und der Spannstrang (8) nicht blockiert ist, unter Einwirkung der Fliehkraft bei Rotation des Rades (8) zumindest abschnittsweise nach außen bewegt wird und diese Bewegung ein Eingreifen der Sperrklinke (12,12', 12", 12"') in das Klinkenrad (11, 11", 11"') bewirkt.

2. Spannschloss nach Anspruch 1, **dadurch gekennzeichnet, dass** die Sperrklinke (12, 12', 12", 12"') exzentrisch um eine Achse (b) drehbar gelagert ist.

3. Spannschloss nach Anspruch 2, **dadurch gekennzeichnet, dass** ein nicht mit dem Klinkenrad (11) zusammenwirkender freier Endabschnitt (12b') länger und massereicher als ein zweiter mit dem Klinkenrad (11) zusammenwirkender Endabschnitt (12a') der Sperrklinke (12') ausgebildet ist (Fig. 3).

4. Spannschloss nach Anspruch 3, **dadurch gekennzeichnet, dass** das Klinkenrad (11) an einer äußeren Umfangsfläche eine Verzahnung (11a) aufweist (Fig. 2 und 3).

5. Spannschloss nach Anspruch 1, **dadurch gekennzeichnet, dass** das Klinkenrad (11', 11") an einer inneren Umfangsfläche (11a', 11a") eine Verzahnung aufweist, mit welcher die Sperrklinke (12", 12"') durch eine von der Fliehkraft bewirkte Verschiebung und/oder Verdrehung der Sperrklinke (12", 12"') in Eingriff bringbar ist, wobei die Sperrklinke (12", 12"') von dem Klinkenrad (11', 11") umgeben ist (Fig. 4 und 5b).

6. Spannschloss nach Anspruch 1, **dadurch gekennzeichnet, dass** die Sperrklinke (12", 12"') plattenförmig ausgebildet ist und zumindest einen mit dem Klinkenrad (11', 11") in Eingriff bringbaren Fortsatz (12a", 12a"') aufweist.

7. Spannschloss nach Anspruch 5, **dadurch gekennzeichnet, dass** die Sperrklinke (12", 12"') mit zumindest einer der Fliehkraft entgegen wirkenden Feder (13,17) belastet ist.

8. Spannschloss nach einem der Ansprüche 5 bis 7, **dadurch gekennzeichnet, dass** die Sperrklinke (12") in radialer Richtung verschiebbar an einem Führungszapfen (14) des Gehäuses (7) gelagert ist, wobei die Sperrklinke (12") eine Aufnahme (15) für den Führungszapfen (14) aufweist, wobei der an die Aufnahme (15) anschließende, den mit dem Klinkenrad (11') in Eingriff bringbaren Fortsatz (12a") aufweisende Endbereich (12b") der Sperrklinke (12") den größten Teil der Masse der Sperrklinke (12") aufweist (Fig. 4).

9. Spannschloss nach Anspruch 8, **dadurch gekennzeichnet, dass** eine Schraubenfeder (13) vorgesehen ist, die zwischen dem Führungszapfen (14) und einem den mit dem Klinkenrad (11') in Eingriff bringbaren Fortsatz (12a") aufweisenden Endbereich (12b") gegenüberliegenden Endbereich (15a) der Ausnehmung (15) angeordnet ist.

10. Spannschloss nach einem der Ansprüche 5 bis 7, **dadurch gekennzeichnet, dass** die Sperrklinke (12'") im Bereich ihres mit dem Klinkenrad (11") zusammenwirkenden Endbereiches (12a'") um eine Achse (c) drehbar gelagert ist, wobei die Sperrklinke (12'") eine Ausnehmung (16) zur Aufnahme des Führungszapfens (14) des Gehäuses (7) aufweist und ein an die Ausnehmung (16) anschließender, freier dem mit dem Klinkenrad zusammenwirkenden Endbereiches (12a"') gegenüberliegender Endabschnitt (12b"') der Sperrklinke (12"') den größten Teil der Masse der Sperrklinke (12"') aufweist.

11. Spannschloss nach einem der Ansprüche 1 bis 10, **dadurch gekennzeichnet, dass** die Wickelrolle (9) und das Klinkenrad (11, 11', 11") einstückig miteinander ausgebildet sind.
